# EUROPEAN PATENT APPLICATION

(11) **EP 4 640 445 A1**
(43) Date of publication of application: **29.10.2025**
(21) Application number: 23906357.1
(22) Date of filing: 18.08.2023
(51) Int. Cl.: B60C 9/18, B60C 9/20, B60C 9/22

(54) **MOTORCYCLE TIRE**

(30) Priority: 21.12.2022 JP 2022204375
(71) Applicant: BRIDGESTONE CORPORATION, Chuo-ku Tokyo 104-8340 (JP)
(72) Inventor: MURAMATSU Hoshihiko, Tokyo 104-8340 (JP)
(74) Representative: Marks & Clerk LLP
(86) International application number: PCT/JP2023/029795
(87) International publication number: WO 2024/134976

(57) **Abstract**

To provide a motorcycle tire that is suppressed in reduction in grip force in the lateral direction during driving and rolling to achieve an enhancement in cornering performance. A motorcycle rear tire 10 including a spiral belt 2 in which a carcass 1 striding between paired bead portions 13 and extending in a toroid manner serves as a skeleton and a belt cord is formed outside in a tire radial direction of the carcass with being wound in a spiral manner in a tire circumferential direction. Not only the belt cord has a 1 × N structure, but also an elongation in application of a load of 50 N on the belt cord taken out from the tire is more than 0.3% and less than 0.7%.

## Description

### TECHNICAL FIELD

The present invention relates to a motorcycle tire (hereinafter, also simply referred to as "tire"), specifically relates to a motorcycle rear tire associated with improvement of a belt cord used in a spiral belt, particularly relates to a motorcycle pneumatic tire.

### BACKGROUND ART

Conventionally, there have been used as belts that reinforce tread surface portions of motorcycle tires, two or more tilted belt layers placed so that cord directions are mutually crossed between the layers, or one or more spiral belts made of rubber-covered cords wound in a spiral manner in the tire circumferential direction.

In particular, as a prior art relating to a motorcycle tire with a spiral belt, for example, Patent Document 1 discloses a motorcycle pneumatic radial tire in which not only a steel cord having specified tensile fracture strength is used in a monospiral belt, but also the cord count in the shoulder portion is set to be smaller than the cord count in the tire equator, the width of arrangement of the monospiral belt is in a specified range, and the amount of overlap between the monospiral belt and a textile reinforcement layer arranged on each of both ends of the belt is defined in a specified range. An object of the technique described in Patent Document 1 is to provide a motorcycle pneumatic radial tire that achieves an enhancement in stability during rolling by solving the problem of trade-off between ground contactability and lateral rigidity during rolling and then simultaneously satisfying these at high levels.

### RELATED ART DOCUMENT

### PATENT DOCUMENT

### [Patent Document 1] WO 2006/098112

### SUMMARY OF THE INVENTION

### PROBLEMS TO BE SOLVED BY THE INVENTION

However, rear tires with conventional spiral belts have been sometimes insufficient in cornering performance of motorcycles during rolling, in particular, at the early stage during which bodies are standing up from the full bank state where such bodies are most highly inclined, for example, in the camber angle range of 50° to 40°. The reason for this is considered because, when accelerators are opened during rolling to increase the driving force, rear tires as drive wheels are lowered in the ground contact area, causing the grip force occurring in the lateral direction to be insufficient. Such a circumstance has not been studied also with respect to the tire disclosed in Patent Document 1.

An object of the present invention is to provide a motorcycle tire that is suppressed in reduction in grip force in the lateral direction during driving and rolling to achieve an enhancement in cornering performance.

### MEANS FOR SOLVING THE PROBLEMS

It has been found from the analysis results of the ground contact state of a rear tire by the present inventor that the tensile input in the tire circumferential direction is applied to a spiral belt on a ground contact surface during driving and rolling. The present inventor has made intensive studies, and as a result, has found that, if the elongation in the tire circumferential direction, of a spiral belt, can be increased during application of the tensile input, the ground contact surface is expanded in the tire circumferential direction and the ground contact area is expanded, resulting in achievement of an enhancement in lateral force.

The present inventor has further made studies in view of this circumstance, and as a result, has found that the above problems can be solved by specifying the elongation of a belt cord used in a spiral belt of a motorcycle rear tire, to a predetermined value, leading to completion of the present invention.

Specifically, the present invention is as follows.
(1) A motorcycle rear tire including a spiral belt in which a carcass striding between paired bead portions and extending in a toroid manner serves as a skeleton, and a belt cord is formed outside in a tire radial direction of the carcass with being wound in a spiral manner in a tire circumferential direction, wherein
   not only the belt cord has a 1 × N structure, but also an elongation in application of a load of 50 N on the belt cord taken out from the tire is more than 0.3% and less than 0.7%.
(2) The motorcycle tire according to (1), wherein the belt cord is formed by twisting N steel filaments, and a twisting pitch in the belt cord not covered with rubber before vulcanization is 5.2 to 8.8 mm.
(3) The motorcycle tire according to (1) or (2), wherein a cord count in the belt cord in the spiral belt is 10 to 25/25 mm.
(4) The motorcycle tire according to any of (1) to (3), wherein a belt width of the spiral belt, as measured along a tire surface, is 100 mm to 240 mm.

In the present invention, unless particularly noted, various dimensions of the tire each refer to a value measured for the tire assembled with a rim prescribed by a valid industrial standard in a locality where the tire is produced and used, the measurement being performed in a state where the tire is charged with an internal pressure prescribed by such an industrial standard with no load. The "industrial standard" refers to, for example, JATMA (Japan Automobile Tire Manufacturers Association) YEAR BOOK in Japan, ETRTO (European Tyre and Rim Technical Organisation) STANDARD MANUAL in Europe, or TRA (THE TIRE and RIM ASSOCIATION INC.) YEAR BOOK in U.S.A.

### EFFECTS OF THE INVENTION

According to the present invention, the above configuration is adopted to make it possible to realize a motorcycle tire that is suppressed in reduction in grip force in the lateral direction during driving and rolling to achieve an enhancement in cornering performance.

### BRIEF DESCRIPTION OF THE DRAWINGS

[FIG. 1] A width-direction cross-sectional view illustrating one example of the motorcycle tire of the present invention.
[FIG. 2] A width-direction cross-sectional view illustrating one configuration example of the belt cord used in the spiral belt in the present invention.
[FIG. 3] A graph (schematic view) representing one example of a stress-strain curve of the belt cord.
[FIG. 4] An explanation diagram illustrating a state where steel filaments are biasedly placed in a cord cross section.

### MODE FOR CARRYING OUT THE INVENTION

Hereinafter, embodiments of the present invention are described with reference to the drawings.

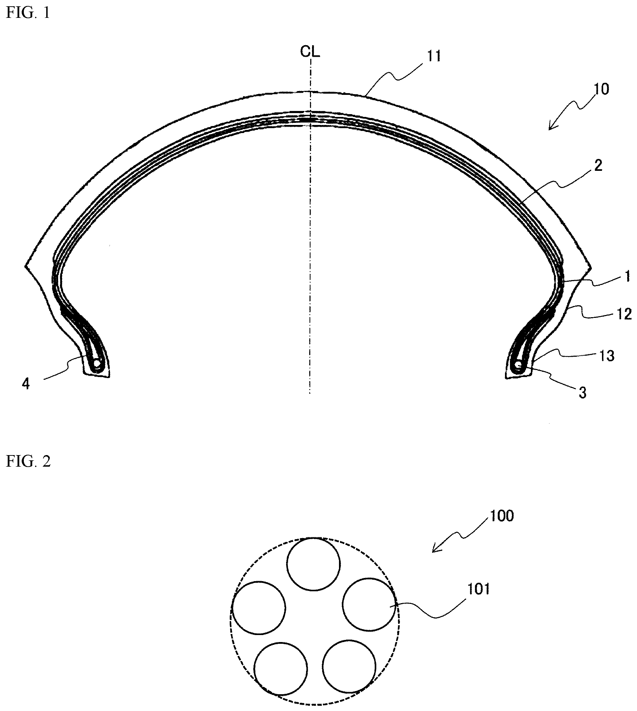

FIG. 1 is a width-direction cross-sectional view illustrating one example of the motorcycle tire of the present invention. A motorcycle tire 10 illustrated is a motorcycle rear tire, and includes a tread portion 11 annularly formed, and paired sidewall portions 12 and bead portions 13 sequentially arranged inside in the tire radial direction. The motorcycle tire 10 illustrated includes a spiral belt 2 where a carcass 1 striding between the paired bead portions 13 and extending in a toroid manner serves as a skeleton and a belt cord is formed outside in the tire radial direction with being wound in a spiral manner in the tire circumferential direction.

In the motorcycle tire of the present invention, as the belt cord used in the spiral belt 2, one is used which has a 1 × N structure and in which the elongation in application of a load of 50 N on the belt cord taken out from the tire is more than 0.3% and less than 0.7%. Such a highly stretchable belt cord can be used to increase the elongation in the tire circumferential direction, of the spiral belt 2, in application of tensile input in the tire circumferential direction, to the spiral belt 2 of the ground contact surface, during driving and rolling.

According to the present invention, the ground contact surface can be expanded in the tire circumferential direction during driving and rolling, and the ground contact area can be expanded, resulting in an enhancement in lateral force. In the tire of the present invention, a value equal to or higher than conventional one can be secured also with respect to the value of vertical rigidity/lateral rigidity.

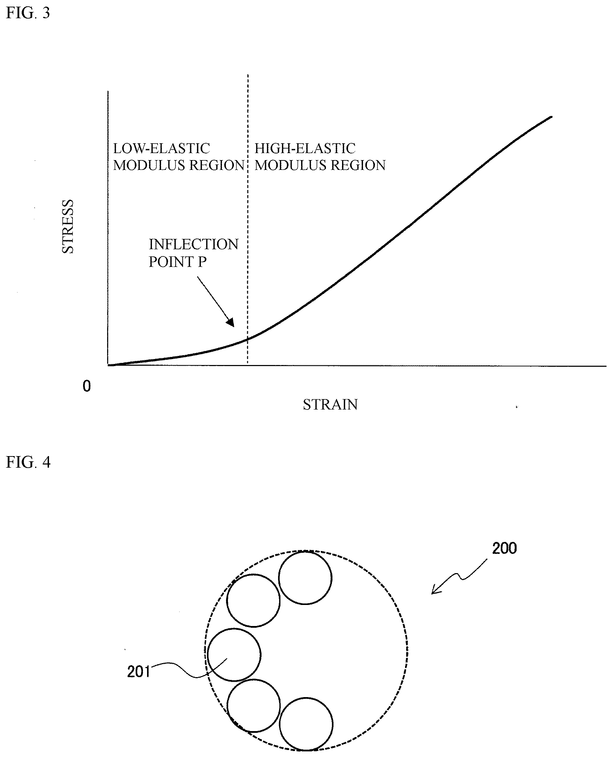

FIG. 3 represents a graph (schematic view) of one example of a stress-strain curve of the belt cord taken out from the tire. The belt cord in the present invention is excellent in stretchability, and specifically exhibits stress-strain characteristics as represented in FIG. 3. The stress-strain curve illustrated has an inflection point P, and represents a relatively low elastic modulus in a low-elastic modulus region from the origin point to the inflection point P and represents a relatively high elastic modulus in a high-elastic modulus region beyond the inflection point P. The elastic modulus mentioned here means the tensile elastic modulus.

In the present invention, it is necessary for the belt cord used in the spiral belt 2 that the elongation in application of a load of 50 N on the belt cord taken out from the tire be more than 0.3% and less than 0.7%. If the elongation is 0.3% or less, the enhancement effect of the lateral force is not obtained, and if the elongation is 0.7% or more, the tire is lowered in rigidity and deteriorated in steering stability, and therefore, the intended effects of the present invention are not obtained in any case. The elongation can be in the above range to allow an increase in ground contact area during driving and rolling and favorable tire rigidity to be simultaneously satisfied.

In the present invention, the belt cord taken out from the tire means a belt cord in a state of being attached with rubber, the belt cord being cut out from the interior of a product tire vulcanized.

In the present invention, as the belt cord used in the spiral belt 2, a twisted cord of a 1 × N structure (N = 2 to 7), formed by mutually twisting N filaments, particularly, shaped steel filaments, is used. The reason why a singly twisted belt cord of a 1 × N structure is used in the present invention is because cord characteristics having high stretchability as described above are easily obtained as compared with a plurally twisted cord of an N × M structure. As the belt cord in the present invention, a steel cord 100 of a 1 × 5 structure, formed by twisting shaped five steel filaments 101, in which the cross section structure is illustrated in FIG. 2, can be most preferably used.

The diameter of the belt cord in the present invention, in which the belt cord is in a state of being not covered with rubber before vulcanization, is suitably 0.59 to 0.71 mm, more suitably 0.64 to 0.69 mm. Such a belt cord can be used to more appropriately obtain the effects of the present invention.

Furthermore, the twisting pitch in the belt cord in the present invention, in which the belt cord is in a state of being not covered with rubber before vulcanization, is suitably 5.2 to 8.8 mm, more suitably 5.5 to 7.5 mm. In a case where the twisting pitch in the belt cord is too small, production stability deteriorates. In this regard, in a case where the twisting pitch in the belt cord is too large, a failure where steel filaments 201 are not uniformly placed, but are biasedly placed on a cross section of a steel cord 200, as illustrated in FIG. 4, occurs during cord production, if required expansibility is tried to be ensured.

Moreover, the shaping height of the steel filaments in the belt cord in the present invention, in which the belt cord is in a state of being not covered with rubber before vulcanization, is suitably 0.70 to 0.80 mm, more suitably 0.71 to 0.74 mm. Such a belt cord can be used to more appropriately obtain the effects of the present invention.

In the motorcycle tire of the present invention, a belt cord satisfying the above conditions is used in the spiral belt 2. The spiral belt 2 is formed by winding the belt cord in a spiral manner in the tire circumferential direction, and the tire circumferential direction mentioned here means that the direction is substantially parallel with a tire equatorial plane CL.

In the present invention, the cord count in the belt cord in the spiral belt 2 is suitably 10 to 25/25 mm, more suitably 16 to 24/25 mm. If the cord count in the belt cord is too small, durability and rigidity are liable to be insufficient.

While the motorcycle tire of the present invention is needed to satisfy the above conditions with respect to the belt cord of the spiral belt 2, the details of any other tire structure and a material used are not particularly limited, and, for example, the following configuration can be adopted.

The carcass 1 is composed of at least one carcass ply, and is formed with relatively highly-elastic textile cords being aligned in parallel with each other. The number of carcass plies may be one or two, or may be three or more. In an example illustrated, two carcass plies are placed. Both end portions of each of the carcass plies may be engaged with being folded back around a bead core 3 embedded in each of the bead portions 13 from the inside to the outside of the tire or may be engaged with being sandwiched from both sides by a bead wire, at each of the bead portions 13, and any securing method may be used.

The spiral belt 2 can be placed with at least one thereof, or may be placed with two or more thereof. In an example illustrated, the spiral belt 2 is placed with one thereof. The belt width of the spiral belt, as measured along a tire surface, is suitably 100 mm to 240 mm.

Although not illustrated, in the present invention, furthermore, a width-direction belt layer formed by covering reinforcement cords paralleled in the tire width direction with rubber may be placed, or two or more tilted belt layers placed so that cord directions are mutually crossed between the layers may be placed, in addition to the spiral belt 2, outside in the tire radial direction of the spiral belt 2. Examples of the reinforcement material constituting such a belt layer include a nylon fiber, aromatic polyamide (trade name: Kevlar (registered trademark)), and steel. Among these, aromatic polyamide and steel are each a reinforcement material that can inhibit swelling of a tread part without being elongated even at a high temperature.

Furthermore, in the motorcycle tire of the present invention, a bead filler 4 can be placed outside in the tire radial direction of the bead core 3, and an inner liner not illustrated can be placed in the innermost layer of the tire.

The tire 10 illustrated can be applied to a tire of a radial structure.

### EXAMPLES

Hereinafter, the present invention is more specifically described with reference to specific Example.

### (Example)

A motorcycle rear tire having a tire size of 200/655R17 was produced. This tire, in which a carcass 1 made of two carcass plies served as a skeleton, sequentially included one spiral belt 2 formed outside in the tire radial direction by winding a belt cord satisfying the following conditions, in a spiral manner in the tire circumferential direction, and a width-direction belt layer formed by covering reinforcement cords paralleled in tire width direction with rubber.
- Cord structure: Steel cord of 1 × 5 structure, formed by twisting five steel filaments each having a diameter of 0.21 mm.
- Elongation in application of load of 50 N on belt cord taken out from tire: 0.5%.

The two carcass plies were reinforced by ply cords (material: nylon fiber) arranged so as to be mutually crossed at a cord angle of ± 6° to the tire width direction. The belt width of the spiral belt, as measured along a tire surface, was 185 mm, and the cord count in the belt cord in the spiral belt was 20/25 mm.

### (Conventional Example)

A test tire of Conventional Example was produced in the same manner as in Example except that conditions of the belt cord used in the spiral belt were changed as shown below.
- Cord structure: Steel cord of 1 × 5 structure, formed by twisting five steel filaments each having a diameter of 0.21 mm.
- Elongation in application of load of 50 N on belt cord taken out from tire: 0.3%.

### (Evaluation of vertical rigidity and lateral rigidity)

Evaluation of vertical rigidity and lateral rigidity is performed with respect to each test tire that is in a state of being mounted to a rim of a rim size of MT 6.00 × 17, charged with an internal pressure of 180 kPa, and subjected to application of a load of 2 kN. The results are each shown as an average value at a camber angle of 0° to 50° under the assumption that the result in Conventional Example is 100%.

### (Dynamic ground contact measurement)

The ground contact area during driving and rolling of each test tire is evaluated in conditions of a camber angle of 47°, a slip angle of 0°, and driving force at 0.9 kN with respect to each test tire that is in a state of being mounted to a rim of a rim size of MT 6.00 × 17, charged with an internal pressure of 180 kPa, and subjected to application of a load of 1.5 kN. The results are each shown as an index under the assumption that the result in Conventional Example is 100.

### (Friction circle test)

The lateral force during driving and rolling is evaluated by continuously applying driving force at a camber angle of 45° and a slip angle of 0°, to each test tire that is in a state of being mounted to a rim of a rim size of MT 6.00 × 17, charged with an internal pressure of 180 kPa, and subjected to application of a load of 1.5 kN. The results are each shown as a numerical value in driving force at 0.9 kN under the assumption that the result in Conventional Example is 100%.

These results are shown in Table 1 below.

**[Table 1]**

| | | Conventional Example | Example |
|---|---|---|---|
| Vertical rigidity (%) | | 100 | 101 |
| Lateral rigidity (%) | | 100 | 113 |
| Dynamic ground contact | Ground contact area (index) | 100 | 104 |
| Friction circle | Lateral force (%) | 100 | 107 |

From the results shown in Table above, values with respect to both vertical rigidity and lateral rigidity, which are respectively equal to or more than those of the test tire of Conventional Example, are ensured in the test tire of Example.

The test tire of Example is increased in ground contact area by about 4%, as compared with the test tire of Conventional Example.

It is clear from the above results that the test tire of Example is suppressed in reduction in grip force in the lateral direction during driving and rolling and is enhanced in cornering performance.

### DESCRIPTION OF SYMBOLS

1 carcass
2 spiral belt
3 bead core
4 bead filler
10 motorcycle tire
11 tread portion
12 sidewall portion
13 bead portion
100, 200 steel cord
101, 201 steel filament

## Claims

1. A motorcycle rear tire comprising a spiral belt in which a carcass striding between paired bead portions and extending in a toroid manner serves as a skeleton and a belt cord is formed outside in a tire radial direction of the carcass with being wound in a spiral manner in a tire circumferential direction, wherein
not only the belt cord has a 1 × N structure, but also an elongation in application of a load of 50 N on the belt cord taken out from the tire is more than 0.3% and less than 0.7%.

2. The motorcycle tire according to claim 1, wherein the belt cord is formed by twisting N steel filaments, and a twisting pitch in the belt cord not covered with rubber before vulcanization is 5.2 to 8.8 mm.

3. The motorcycle tire according to claim 1, wherein a cord count in the belt cord in the spiral belt is 10 to 25/25 mm.

4. The motorcycle tire according to claim 1, wherein a belt width of the spiral belt, as measured along a tire surface, is 100 mm to 240 mm.
